# EUROPEAN PATENT APPLICATION

(11) **EP 4 667 266 A1**
(43) Date of publication of application: **24.12.2025**
(21) Application number: 25179164.6
(22) Date of filing: 27.05.2025
(51) Int. Cl.: B60K 35/00, B60K 35/10, B60K 35/22, B60K 35/25, G06F 3/01

(54) **DEVICE WITH VIBRATION FUNCTION**

(30) Priority: 19.06.2024 JP 2024098923
(71) Applicant: Alps Alpine Co., Ltd., Ota-ku, Tokyo 145-8501 (JP)
(72) Inventor: Ohira, Seiji, Iwaki-city Fukushima (JP)
(74) Representative: Schmitt-Nilson Schraud Waibel Wohlfrom Patentanwälte Partnerschaft mbB

(57) **Abstract**

A device with a vibration function includes a device element configured to be fixed to a base, and an actuator configured to generate a vibration that vibrates the device element, the vibration being at a frequency such that a phase difference between vibrations of the device element and the base is 90° or more.

## Description

The present application is based on and claims priority to Japanese patent application No. 2024-098923 filed on June 19, 2024, with the Japanese Patent Office.

The disclosures herein relate to devices with vibration functions.

As a device with a vibration function, an in-vehicle display with a touch panel that provides tactile feedback through vibration upon user interaction is known (e.g., Patent Literature (PTL) 1) .

In this display with the touch panel, the display is elastically installed to a housing and a movable counter mass is provided to control against a transmission of vibration to the housing.

Generally, an in-vehicle device with a vibration function is fixed to a vehicle body, and the vibration of the device is transmitted to the vehicle body.

Therefore, excessive device vibration can cause significant vibrations in the vehicle body, leading to unpleasant sensations or abnormal noises. This has been a challenge in increasing the device's vibration levels.

Therefore, the present disclosure controls against the transmission of vibration from the device with the vibration function to a base to which the device is fixed.

### PATENT LITERATURE

[PTL 1] Japanese Laid-Open Patent Publication No. 2019-535062
The present disclosure relates to a device with a vibration function according to the appended claims. Embodiments are disclosed in the dependent claims.

A device with a vibration function includes a device element configured to be fixed to a base, and an actuator configured to generate a vibration that vibrates the device element, the vibration being at a frequency such that a phase difference between vibrations of the device element and the base is 90° or more.

According to the device with the vibration function described above, since the direction of the load input from the device element to the base is deviated from the moving direction of the base, the acceleration transmitted from the device element to the base is attenuated and the transmission of vibration to the base is controlled against.

As described above, according to the present disclosure, the transmission of the vibration from the device element with the vibration function to the base to which the device element is fixed can be controlled against.
FIG. 1 is a drawing illustrating an example of a device with a vibration function according to an embodiment of the present disclosure;
FIG. 2A is a schematic diagram illustrating a structure of a display unit with a touch panel and an example of a relation between a display and a vehicle body;
FIG. 2B is a drawing illustrating a spring-mass-damper system model of the display according to a embodiment of the present disclosure;
FIG. 3A is a graph illustrating inertance of an actuator, a display, and a vehicle body with respect to a frequency of a drive signal;
FIG. 3B is a graph illustrating a time waveform of acceleration of a display and a vehicle body when the frequency of the drive signal is 110 Hz;
FIG. 3C is a graph illustrating phases of an actuator, a display, and a vehicle body with respect to the frequency of the drive signal, and a phase difference of vibration between the vehicle body and the display;
FIG. 3D is a graph illustrating a time waveform of acceleration of a display and a vehicle body when the frequency of the drive signal is 220 Hz;
FIG. 4 is a drawing illustrating another example of a display and its spring-mass-damper system model according to an embodiment of the present disclosure;
FIG. 5A is a graph illustrating inertance of an actuator, a display, and a vehicle body with respect to the frequency of the drive signal when a natural frequency of the actuator is 200 Hz;
FIG. 5B is a graph illustrating phases of an actuator, a display, and a vehicle body with respect to the frequency of the drive signal, and a phase difference of vibration between the vehicle body and the display when the natural frequency of the actuator is 200 Hz; and
FIG. 5C is a graph illustrating a time waveform of acceleration of a display and an vehicle body when the frequency of the drive signal is 200 Hz.

In the following, embodiments of the present disclosure will be described.

One or more embodiments are applied to an in-vehicle device (i.e., device provided in a vehicle) with a vibration function fixed to a vehicle body and operated by user interaction.

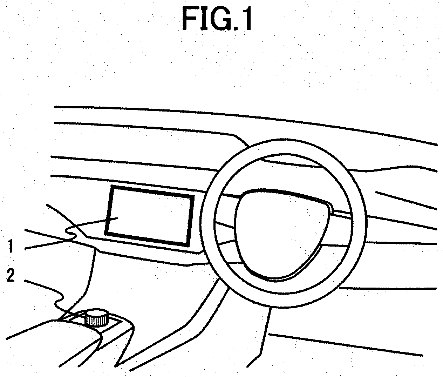

Such in-vehicle devices include, for example, a display unit 1 with a touch panel arranged on a center dashboard of an automobile, and a multifunction switch 2 arranged on the center console, as shown in FIG. 1. The in-vehicle device may be any other in-vehicle device which is operated by user interaction, such as a switch for operating an air conditioner or an audio system, or an in-vehicle device integrating the display unit 1 and the multifunction switch 2.

In such in-vehicle device, the vibration function may be basically used to provide tactile feedback by vibration when a user interaction operation occurs.

An embodiment will be described below, with an example of a case when a display unit 1 is applied to a touch panel.

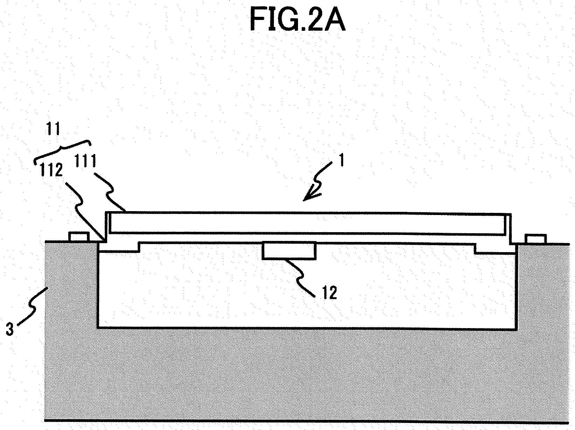

FIG. 2A is a schematic diagram illustrating a structure of a display unit 1 with a touch panel and an example of a relation between a display 11 and a vehicle body 3.

As shown in the figure, the display unit 1 includes the display 11 and an actuator 12 that generates vibration fixed to the display 11.

The display 11 includes a display touch panel 111 that serves both as a touch panel and a display panel, and a housing 112 to which the display touch panel 111 is fixed. The housing 112 of the display 11 is fixed to the vehicle body 3 by screws or the like.

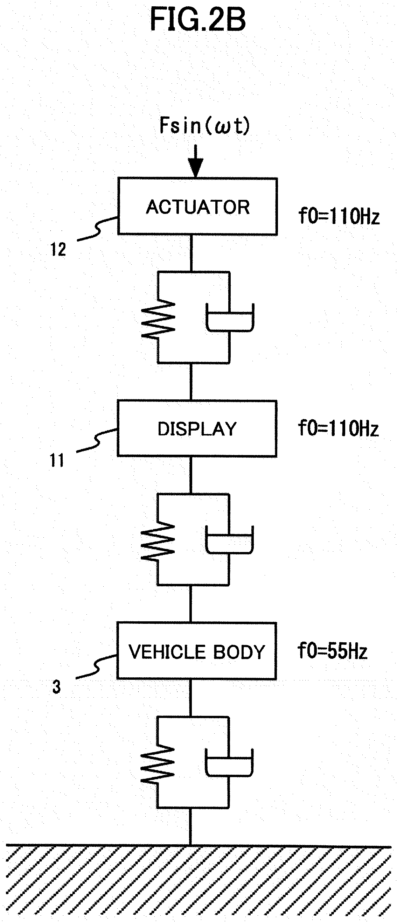

The actuator 12, the display 11, and the vehicle body 3 as described above can be modeled with the spring-mass-damper system model shown in FIG. 2B with respect to the vibration generated by the actuator 12.

Hereinafter, a configuration of the actuator 12, the display 11, and the vehicle body 3 used for verification of the present disclosure is referred to as a verification configuration, and an embodiment will be described with specific examples of the verification configuration.

Here, in the verification configuration, an actuator 12 having a natural frequency f0 of 110 Hz was used as the actuator 12.

In the verification configuration, the natural frequency f0 of the actuator 12 was 110 Hz, the natural frequency f0 of the display 11 was 110 Hz, and the natural frequency f0 of the vehicle body 3 was 50 Hz. Note that the actuator 12 is driven by the drive signal Fsin(ωt) applied from the outside, and generates vibration of the same frequency as the frequency ω/2π of the drive signal Fsin(ωt). The frequency of the drive signal is variable.

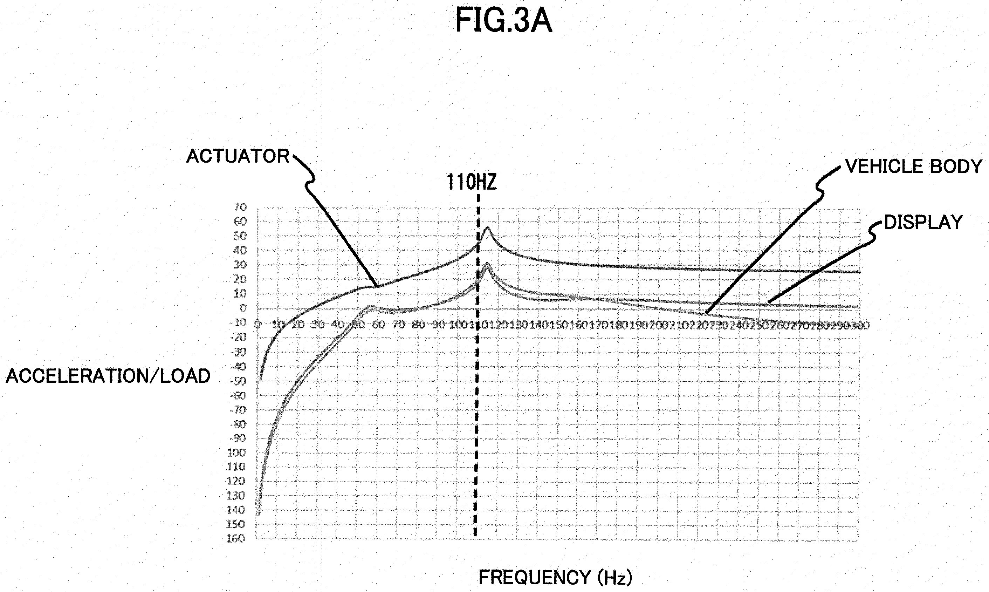

Here, in this case, inertance (acceleration/load) of the actuator 12, the display 11, and the vehicle body 3 with respect to the frequency of the drive signal is as shown in FIG. 3A, and it has been found that the display 11 vibrates most efficiently when the frequency of the drive signal is approximately 110 Hz.

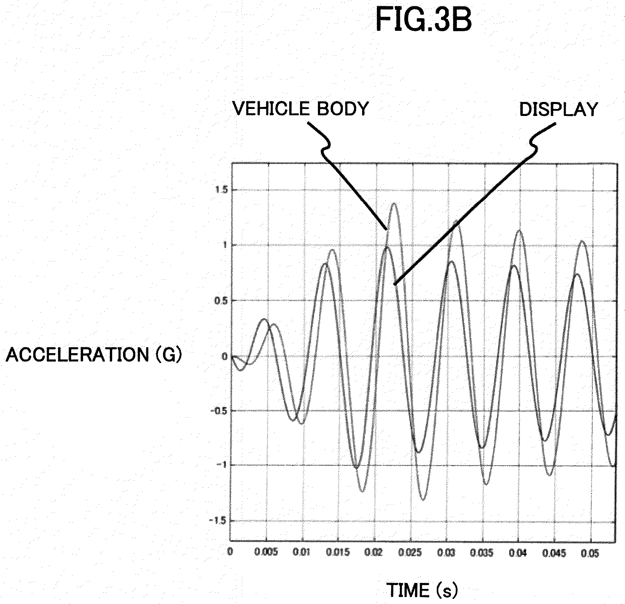

A time waveform of the acceleration of a display 11 and a vehicle body 3 when a drive signal with a frequency of 110 Hz is used is shown in FIG. 3B. The acceleration transmitted from the display 11 to the vehicle body 3 is relatively large, and relatively large vibration occurs in the vehicle body 3.

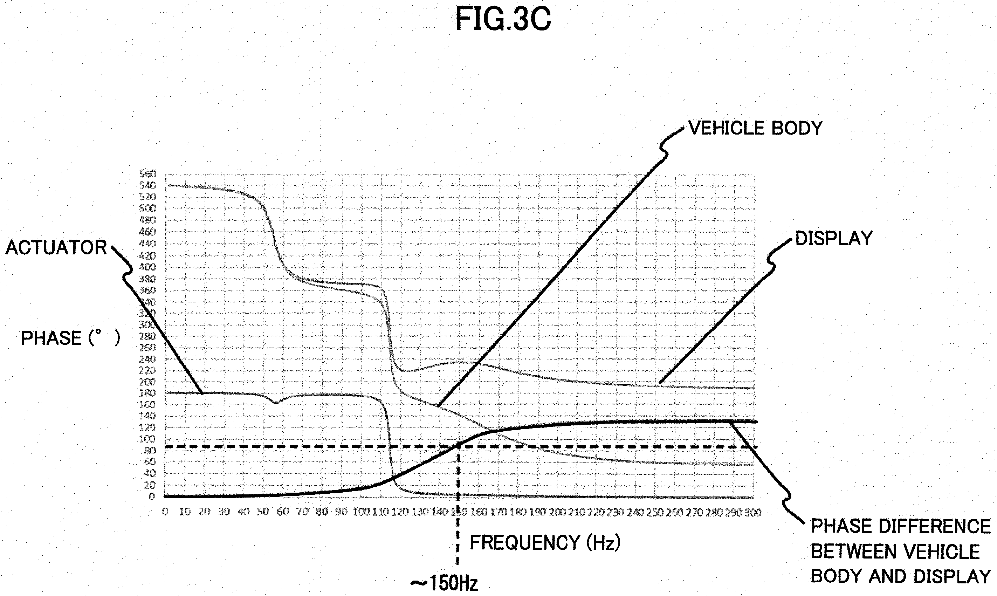

Next, FIG. 3C is a graph illustrating phases of an actuator 12, a display 11, and a vehicle body 3 with respect to the frequency of the drive signal, and a phase difference of vibration between the vehicle body 3 and the display 11.

As shown in the figure, the phase difference between the vibration of the vehicle body 3 and the display 11 increases as the frequency increases, and becomes 90° or more when the frequency exceeds approximately 150 Hz.

Here, when the phase difference between the vibration of the vehicle body 3 and the display 11 is 90° or more, the direction of the load input from the display 11 to the vehicle body 3 deviates from the moving direction of the vehicle body 3, and the acceleration transmitted from the display 11 to the vehicle body 3 is attenuated.

Therefore, the frequency at which the phase difference between the vibration of the vehicle body 3 and the display 11 is 90° or more is used as the frequency of the drive signal of the actuator 12.

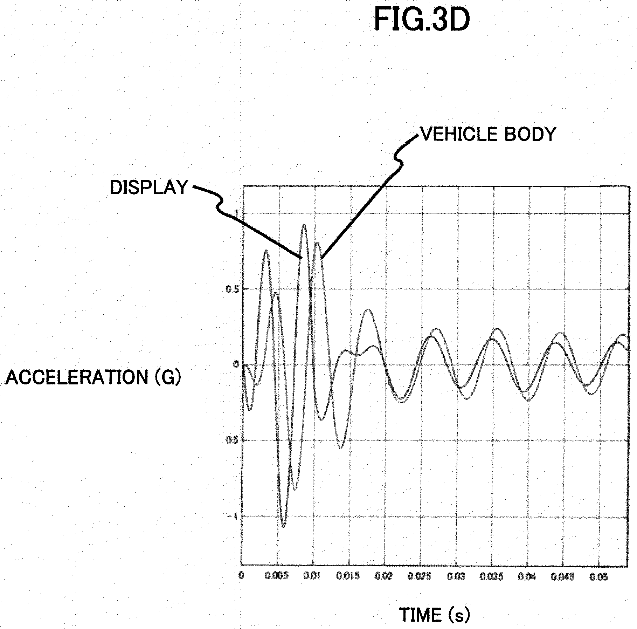

FIG. 3D is a graph illustrating a time waveform of acceleration of a display 11 and a vehicle body 3 when the frequency of the drive signal is 220 Hz, and the acceleration transmitted from the display 11 to the vehicle body 3 is attenuated compared with the case when the drive signal of the frequency of 110 Hz shown in FIG. 3B is used.

Therefore, it can be confirmed from FIG. 3D that the vibration generated in the vehicle body 3 can be controlled against by setting the frequency of the drive signal of the actuator 12 to the frequency where the phase difference between the vibrations of the vehicle body 3 and the display 11 is 90° or more.

In addition, an interaction between the display 11 and the vehicle body 3 is reduced, and the display 11 will readily vibrate.

As shown in the inertance (acceleration/load) of FIG. 3A, when the actuator 12 having the natural frequency f0 of 110 Hz is driven by a drive signal having a frequency in which the phase difference between the vibrations of the vehicle body 3 and the display 11 is 90 or more, efficiency of vibrating the display 11 becomes lower than when the actuator is driven by the drive signal having the frequency around 110 Hz.

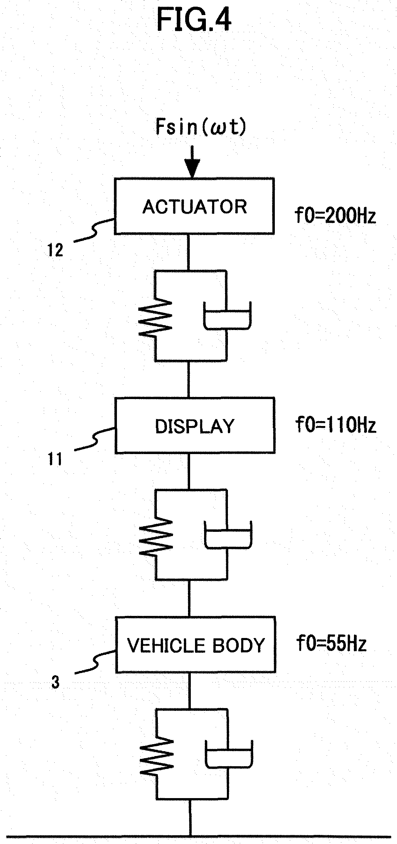

Therefore, as an actuator 12, an actuator 12 may be driven by a drive signal having a frequency around the natural frequency f0 using an actuator 12 whose natural frequency f0 is a frequency at which the phase difference between the vibrations of the vehicle body 3 and the display 11 is 90° or more. FIG. 4 is a drawing illustrating an example of a spring-mass-damper system model when such an actuator 12 is used. In this example, an actuator 12 having a natural frequency f0 of 200 Hz is used as the actuator 12.

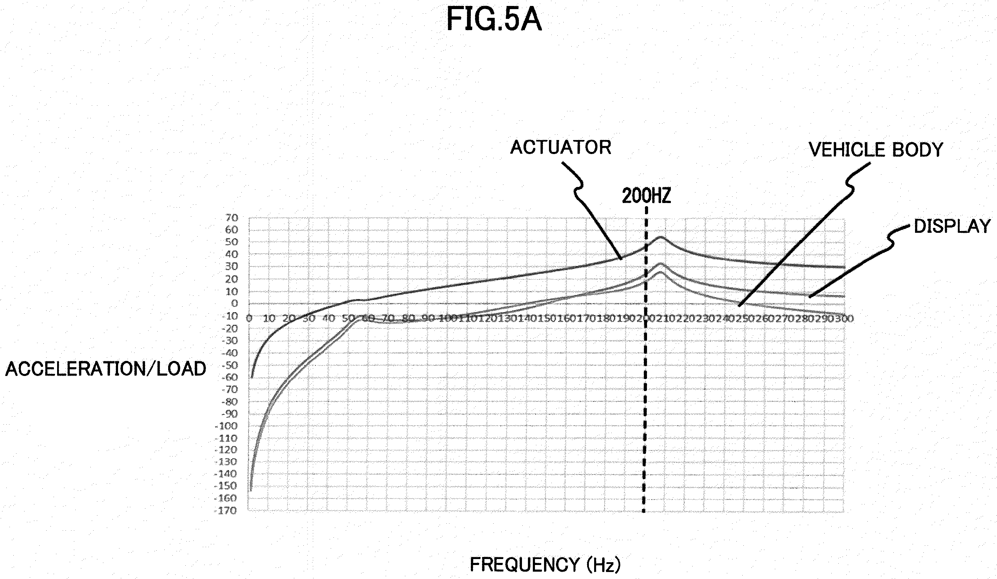

FIG. 5A is a graph illustrating inertance (acceleration/load) of an actuator 12, a display 11, and a vehicle body 3 with respect to the frequency of the drive signal when a natural frequency f0 of the actuator 12 is 200 Hz. As shown in the figure, in this case, the display 11 can be efficiently vibrated by driving the actuator 12 with a drive signal having a frequency around 200 Hz, which is the natural frequency f0.

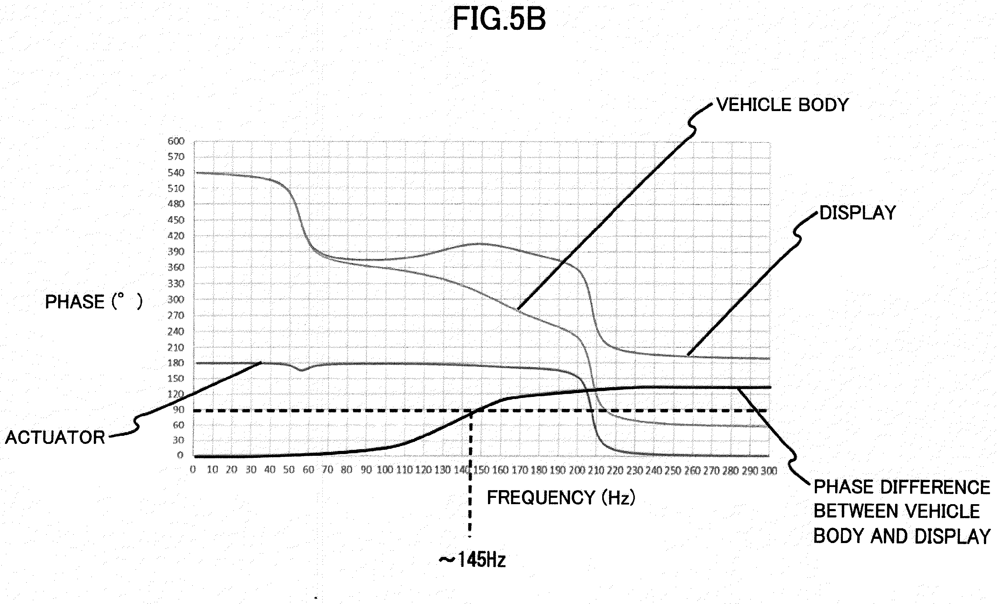

FIG. 5B is a graph illustrating phases of an actuator 12, a display 11, and a vehicle body 3 with respect to the frequency of the drive signal, and a phase difference of vibration between the vehicle body 3 and the display 11 when the natural frequency f0 of the actuator 12 is 200 Hz.

As shown in the figure, also in this case, the phase difference between the vibrations of the vehicle body 3 and the display 11 increases as the frequency increases, and becomes more than 90° when the frequency exceeds approximately 145 Hz.

Therefore, when a frequency around 200 Hz, which is the natural frequency f0, is used as the frequency of the drive signal, the frequency of the drive signal is the frequency at which the phase difference between the vibrations of the vehicle body 3 and the display 11 becomes more than 90°.

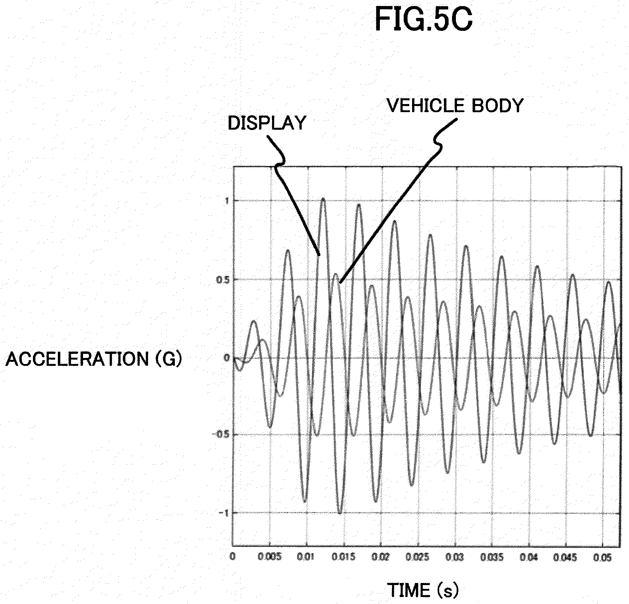

FIG. 5C is a graph illustrating a time waveform of acceleration of a display 11 and a vehicle body 3 when the frequency of the drive signal is 200 Hz. Compared with the case where the drive signal with the frequency of 110 Hz shown in FIG. 3B is used, the acceleration of the display 11 is almost the same, but the acceleration transmitted from the display 11 to the vehicle body 3 is greatly attenuated.

Therefore, by setting the natural frequency f0 of the actuator 12 as the frequency at which the phase difference between the vibration of the vehicle body 3 and the display 11 is 90° or more, and driving the actuator 12 with a drive signal having a frequency around the natural frequency f0, it is possible to efficiently vibrate the display 11 and suppress the vibration generated in the vehicle body 3.

Although the description above is applied to a device with a vibration function that is fixed to the vehicle body 3 and is operated by the user by contact, the present embodiment can be similarly applied to any device with a vibration function that is fixed to any base.

That is, in this case, the actuator 12 which vibrates the device may be driven by a drive signal having a frequency at which the phase difference between the device and the base is 90° or more, or the actuator 12 may be driven by a drive signal having a frequency near the natural frequency of the actuator 12 with the natural frequency of the actuator 12 as the frequency where the phase difference between the device and the base is 90° or more.

## Claims

1. A device with a vibration function, comprising:
a device element configured to be fixed to a base; and
an actuator configured to generate a vibration that vibrates the device element,
the vibration being at a frequency such that a phase difference between vibrations of the device element and the base is 90° or more.

2. The device with the vibration function according to claim 1, wherein a natural frequency of the actuator is same as or approximately a frequency of the generated vibration.

3. The device with the vibration function according to claim 1 or 2, wherein:
the actuator is configured to generate the vibration at a same frequency as a drive signal applied to the actuator; and
a frequency of the drive signal applied to the actuator is such that the phase difference between the vibrations of the device element and the base is 90° or more.

4. The device with the vibration function according to one of claims 1 to 3, wherein:
the base is a vehicle body; and
the device element is an in-vehicle device operated by a user interaction.

5. The device with the vibration function according to claim 4, wherein the device element is a display with a touch panel or a switch.
